# EUROPEAN PATENT APPLICATION

(11) **EP 2 857 966 A1**
(43) Date of publication of application: **08.04.2015**
(21) Application number: 13800947.7
(22) Date of filing: 28.05.2013
(51) Int. Cl.: G06F 9/445

(54) **DEPLOYMENT DEVICE AND DEPLOYMENT METHOD**

(30) Priority: 04.06.2012 JP 2012127259
(71) Applicant: NEC Corporation, Tokyo 108-8001 (JP)
(72) Inventor: SHIMAMURA, Hisashi, Tokyo 108-8001 (JP)
(74) Representative: Vossius & Partner
(86) International application number: PCT/JP2013/003346
(87) International publication number: WO 2013/183249

(57) **Abstract**

When constructing a system, normality of the system is confirmed more efficiently. In deployment device (100), a configuration information storage unit (104) stores, in association with an identifier of a module of which a system is composed, a configuration information including at least one of an identifier of a platform (PF) confirmation module for confirming normality of deployment of a PF module and an identifier of an own confirmation module for confirming normality of deployment of the module. The normality confirmation (unit) 106 performs at least one of confirmation of the normality of the deployment of the PF module using the PF confirmation module, prior to the deployment of the module in the processing device, and confirmation of the normality of the deployment of the module using the own confirmation module, after the deployment of the module in the processing device, by referring to the configuration information.

## Description

### [Technical Field]

The present invention relates to a deployment device and a deployment method for a program.

### [Background Art]

In a system using a virtual machine, an environment (system execution environment) for executing a service application may be manually constructed. In this case, a developer of the service application creates a work procedure for constructing the execution environment as a construction procedure manual. An engineer for constructing the system deploys and sets an OS (Operating System), a middleware, and various modules such as a related library according to the procedure manual and then deploys and sets a developed application module. The engineer confirms whether the execution environment is normally constructed by visually checking a presence or absence of a log and a file related to the deployed module and another output according to a confirmation item list described in the construction procedure manual.

As a method for efficiently constructing such system execution environment, in NPL 1, a method in which the execution environment is constructed by an orchestration tool is disclosed. The orchestration tool constructs the execution environment according to a workflow described for each system separately. The orchestration tool confirms whether the execution environment is normally constructed according to the procedure described in the workflow.

Further, as a related technology, in PTL 1, a technology in which a probe for confirming a normality of a currently operating system is inserted for each component of which the system is composed is disclosed.

### [Citation List]

### [Patent Literature]

[PTL 1] Japanese Patent Publication No. 4809772

### [Non Patent Literature]

[NPL 1] "HP Operations Orchestration software", Hewlett-Packard Company, [online], [searched 29 May 2012], Internet URL:http://www8.hp.com/us/en/software/software-product.html?compURI =tcm:245-936143&pageTitle=operations-orchestration-software

### [Summary of Invention]

### [Technical Problem]

As described in the above-mentioned NPL 1, when the system is constructed by the orchestration tool, the developer has to define the procedure to confirm the normality of the system as a part of the workflow for each system. Therefore, when many kinds of different systems need to be constructed or when a construction target system is a complicated system because it is composed of many modules, the burden on the developer who creates the workflow increases.

An object of the present invention is to solve the above-mentioned problem and provide a deployment device and a deployment method which can efficiently confirm the normality of the system when constructing the system.

### [Solution to Problem]

A deployment device according to an exemplary aspect of the invention includes: a configuration information storage means for storing configuration information including at least one of platform (PF) confirmation information and own confirmation information in association with an identifier of a module of which a system is composed, the PF configuration information including an identifier of a PF confirmation module for confirming normality of deployment of a PF module which is another module on which the module depends, the own confirmation information including an identifier of an own confirmation module for confirming normality of deployment of the module; and a normality confirmation means for performing at least one of confirmation of the normality of the deployment of the PF module in a processing device, using the PF confirmation module, prior to the deployment of the module in the processing device, and confirmation of the normality of the deployment of the module in the processing device, using the own confirmation module, after the deployment of the module in the processing device, by referring to the configuration information.

A deployment method according to an exemplary aspect of the invention includes: storing configuration information including at least one of platform (PF) confirmation information and own confirmation information in association with an identifier of a module of which a system is composed, the PF configuration information including an identifier of a PF confirmation module for confirming normality of deployment of a PF module which is another module on which the module depends, the own confirmation information including an identifier of an own confirmation module for confirming normality of deployment of the module; deploying the module in a processing device; and performing at least one of confirmation of the normality of the deployment of the PF module in the processing device, using the PF confirmation module, prior to the deployment of the module in the processing device, and confirmation of the normality of the deployment of the module in the processing device, using the own confirmation module, after the deployment of the module in the processing device, by referring to the configuration information.

A computer readable storage medium according to an exemplary aspect of the invention, records thereon a program, causing a computer to perform a method comprising: storing configuration information including at least one of platform (PF) confirmation information and own confirmation information in association with an identifier of a module of which a system is composed, the PF configuration information including an identifier of a PF confirmation module for confirming normality of deployment of a PF module which is another module on which the module depends, the own confirmation information including an identifier of an own confirmation module for confirming normality of deployment of the module; deploying the module in a processing device; and performing at least one of confirmation of the normality of the deployment of the PF module in the processing device, using the PF confirmation module, prior to the deployment of the module in the processing device, and confirmation of the normality of the deployment of the module in the processing device, using the own confirmation module, after the deployment of the module in the processing device, by referring to the configuration information.

### [Advantageous Effects of Invention]

The advantageous effect of the present invention is that, when constructing a system, the normality of the system can be confirmed more efficiently.

### [Brief Description of Drawings]

[Fig. 1] A block diagram showing a characteristic configuration of a first exemplary embodiment of the present invention.
[Fig. 2] A block diagram showing a configuration of a deployment system according to the first exemplary embodiment of the present invention.
[Fig. 3] A diagram showing an example of a dependency relationship between modules according to the first exemplary embodiment of the present invention.
[Fig. 4] A diagram showing an example of a configuration information table 300 according to the first exemplary embodiment of the present invention.
[Fig. 5] A diagram showing another example of a configuration information table 300 according to the first exemplary embodiment of the present invention.
[Fig. 6] A diagram showing a summary of a normality confirmation method according to the first exemplary embodiment of the present invention.
[Fig. 7] A diagram showing an example of a construction list according to the first exemplary embodiment of the present invention.
[Fig. 8] A flowchart showing a system construction process according to the first exemplary embodiment of the present invention.
[Fig. 9] A flowchart showing a detail of a construction list generation process (step S12) according to the first exemplary embodiment of the present invention.
[Fig. 10] A flowchart showing a detail of a node process (step S1204) according to the first exemplary embodiment of the present invention.
[Fig. 11] A flowchart showing a detail of a module deployment process (step S17) according to the first exemplary embodiment of the present invention.
[Fig. 12] A diagram showing an example of a configuration information table 300 according to a second exemplary embodiment of the present invention.

### [Description of Embodiments]

### (First exemplary embodiment)

Next, a first exemplary embodiment of the present invention will be described.

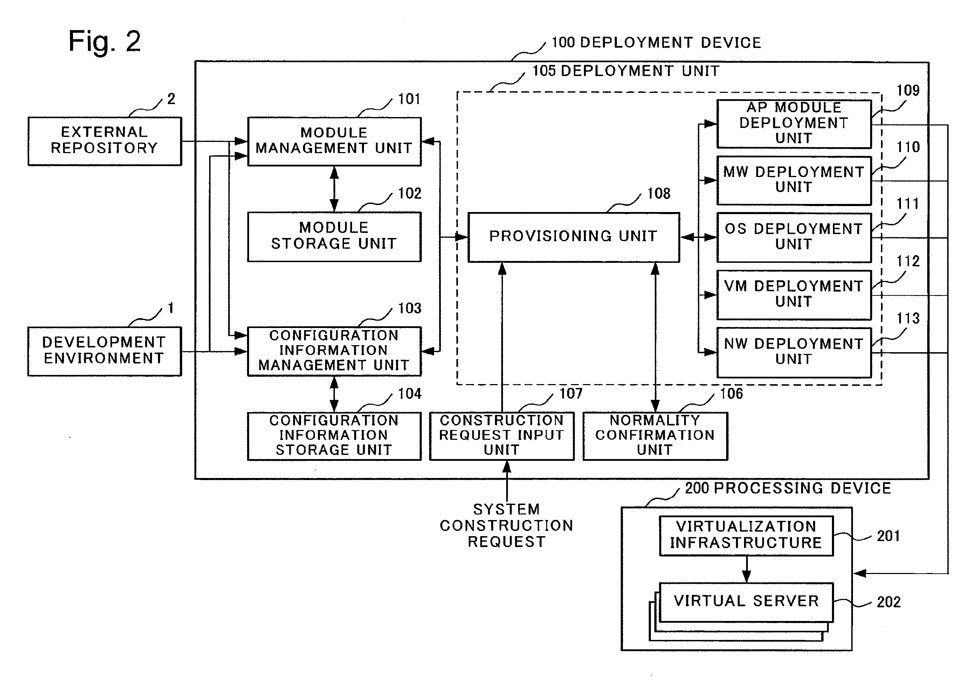

First, the configuration of the first exemplary embodiment of the present invention will be described. Fig. 2 is a block diagram showing a configuration of a deployment system according to the first exemplary embodiment of the present invention.

Referring to Fig. 2, the deployment system includes a development environment 1, an external repository 2, a deployment device 100, and a processing device 200.

The deployment device 100 constructs a system by deploying program modules (hereinafter, referred to as modules) such as an OS, a middleware (MW), and an application (AP) of which an IT system is composed in the processing device 200. Here, the deployment is a process to transmit the module to the processing device 200 and install the module by a program for installation in the processing device 200.

The deployment device 100 deploys each module in the processing device 200 according to the dependency relationship described in the configuration information table 300 of each module.

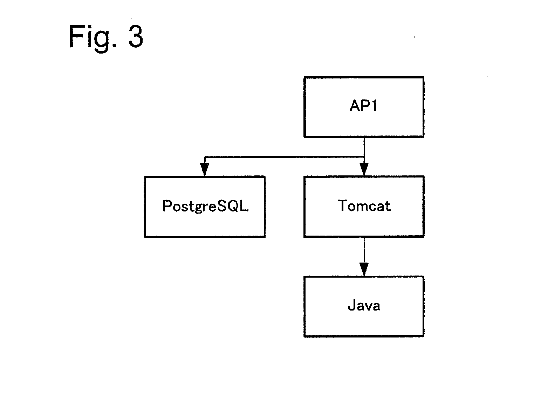

Fig. 3 is a diagram showing an example of the dependency relationship between the modules according to the first exemplary embodiment of the present invention. In Fig. 3, a box represents the module and an arrow between the boxes indicates the dependency relationship. Here, when the module located at the tail of the arrow is deployed in the processing device 200, the module located at the tip of the arrow has to have been installed in the processing device 200. Namely, the deployment of the module located at the tail of the arrow depends on the deployment of the module located at the tip of the arrow. In an example shown in Fig. 3, the deployment of a module "AP1" depends on the deployment of a module "Tomcat" and the deployment of a module "PostgreSQL". The deployment of a module "Tomcat" depends on the deployment of a module "Java (registered trademark)". Further, the module located at the tip of the arrow is called a platform (PF) module or a low order module to the module located at the tail of the arrow and the module located at the tail of the arrow is called a high order module to the module located at the tip of the arrow. Further, a module group of the modules obtained by consecutively tracing the PF modules from a certain module is called a platform of the certain module.

In the first exemplary embodiment of the present invention, an order of deploying the modules is determined so that the PF module on which each module depends is first deployed in the processing device 200.

The deployment device 100 includes a module management unit 101, a module storage unit 102, a configuration information management unit 103, a configuration information storage unit 104, a deployment unit 105, a normality confirmation unit 106, and a construction request input unit 107.

The module management unit 101 acquires the module required for constructing the system from the development environment 1 or the external repository 2 and stores it in the module storage unit 102. For example, the module management unit 101 acquires an AP module from the development environment 1 and acquires a module common to a plurality of systems such as an OS module, a MW module from the external repository 2.

The configuration information management unit 103 acquires the configuration information table 300 of each module from the development environment 1 or the external repository 2 and stores it in the configuration information storage unit 104.

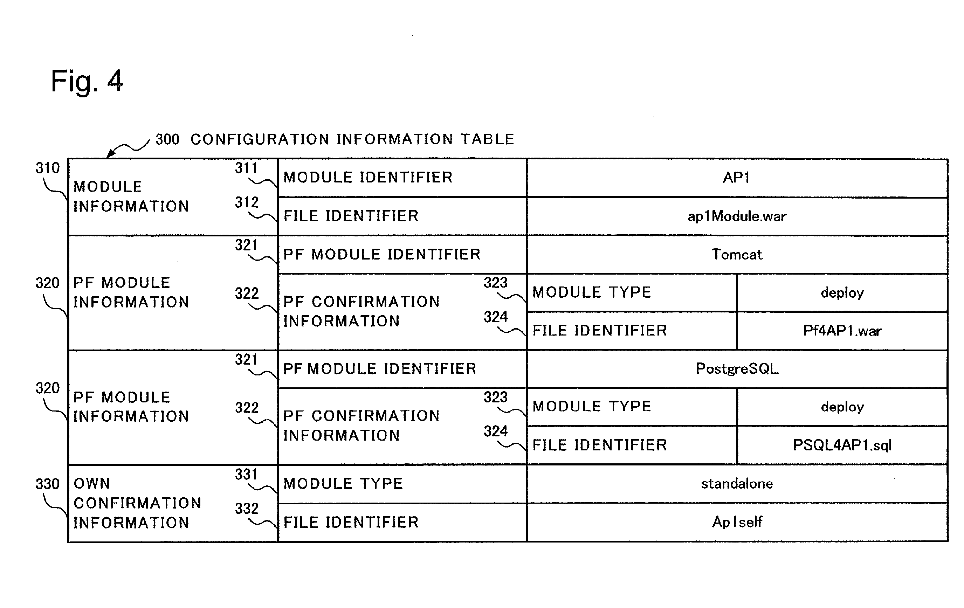

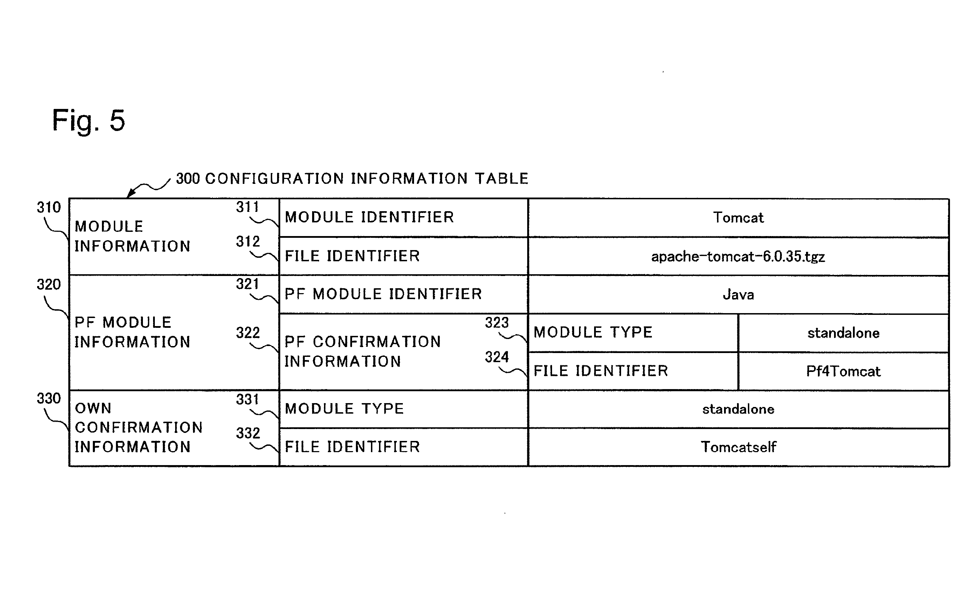

Fig. 4 and Fig. 5 are diagrams showing an example of the configuration information table 300 according to the first exemplary embodiment of the present invention. The configuration information table 300 is set for each module.

The configuration information table 300 includes module information 310, one or more pieces of PF module information 320, and own confirmation information 330.

Here, the module information 310 includes a module identifier 311 and a file identifier 312 of a module designated by the module identifier 311 (deployment target module). Further, when the deployment target module is stored in a package file together with information used for installing the deployment target module, the file identifier 312 may be the identifier of the package file.

The PF module information 320 includes a PF module identifier 321 that is an identifier of the PF module and PF confirmation information 322 for the deployment target module. The PF confirmation information 322 includes a module type 323 and a file identifier 324 of the PF confirmation module.

The PF confirmation module is a module (a program or a script) used for confirming the normality of deployment of the PF module before deploying the deployment target module. The PF confirmation module is deployed on the PF module or the OS and executed. When the module type 323 of the PF confirmation module is "deploy", the PF confirmation module is deployed on the PF module. When the module type 323 is "standalone", the PF confirmation module is directly deployed on the OS.

The PF confirmation module confirms the normality of deployment of the PF module based on a presence or absence of a predetermined file generated when the PF module is deployed or a presence or absence of a predetermined process activated when the PF module is deployed. Further, the PF confirmation module may confirm the normality based on a presence or absence of a predetermined character string of a log that is generated by the OS or the like when the PF module is deployed.

Further, the PF confirmation module may call a predetermined function or an API (Application Program Interface) of the PF module to obtain a returned value and confirm the normality of deployment of the PF module based on whether or not a predetermined return value is obtained. The PF confirmation module may input a predetermined script and data to the PF module and confirm the normality of deployment of the PF module based on whether or not a predetermined result is obtained.

Note that the PF confirmation module may use a file, a process, a function, an API, or the like that is used by the deployment target module in the above-mentioned confirmation.

The own confirmation information 330 includes a module type 331 and a file identifier 332 of an own confirmation module.

The own confirmation module is a module (a program or a script) used for confirming the normality of deployment of the deployment target module after deploying the deployment target module. The own confirmation module is deployed on the deployment target module or the OS and executed. When the module type 331 of the own confirmation module is "deploy", the own confirmation module is deployed on the deployment target module. When the module type 331 is "standalone", the own confirmation module is deployed on the OS directly.

The own confirmation module confirms the normality of deployment of the deployment target module based on for example, a presence or absence of a predetermined file generated when the deployment target module is deployed or a presence or absence of a predetermined process activated when the deployment target module is deployed, like the PF confirmation module. Further, the own confirmation module may confirm the normality based on a presence or absence of the predetermined character string of the log generated by the OS or the like when the deployment target module is deployed.

Further, the own confirmation module may call the predetermined function or the API of the deployment target module to obtain a returned value and confirm the normality of deployment of the deployment target module based on whether or not a predetermined return value is obtained. The own confirmation module may input the predetermined script and data to the deployment target module and confirm the normality of deployment of the deployment target module based on whether or not a predetermined result is obtained.

Fig. 4 shows an example of the configuration information table 300 for the AP module whose module identifier 311 is "AP1". In this case, in order to operate the module "AP1", the PF module whose module identifier 311 is "Tomcat" and the PF module whose module identifier 311 is "PostgreSQL" are required. When confirming the normality of deployment of the PF module "Tomcat", the PF confirmation module whose file identifier 324 is "Pf4AP1.war" is used. When confirming the normality of deployment of the PF module "PostgreSQL", the PF confirmation module whose file identifier 324 is "PSQL4AP1.sq1" is used. Further, when confirming the normality of deployment of the module "AP1", the own confirmation module whose file identifier 332 is "Aplself" is used.

The developer or the like of each module creates the PF confirmation module and the own confirmation module for each module in advance and sets the type and the file identifier of the each module to the PF confirmation information 322 and the own confirmation information 330 in the configuration information table 300 of the module.

The module management unit 101 acquires the created PF confirmation module and the created own confirmation module from the development environment 1 or the external repository 2 and stores them in the module storage unit 102. The configuration information management unit 103 acquires the created configuration information table 300 from the development environment 1 or the external repository 2 and stores it in the configuration information storage unit 104.

Note that the configuration information table 300 may be described in another form such as XML (Extensible Markup Language). When the PF module on which the deployment target module depends does not exist, the PF module information 320 may not be set. When it is not required to confirm the normality of deployment of the PF module or the deployment target module, the PF confirmation information 322 or the own confirmation information 330 may not be set.

The deployment unit 105 includes a provisioning unit 108, an AP module deployment unit 109, a MW deployment unit 110, an OS deployment unit 111, a virtual machine (VM) deployment unit 112, and a network (NW) deployment unit 113.

The provisioning unit 108 deploys each module in the processing device 200 based on the configuration information table 300 of each module of which the system is composed. Here, the provisioning unit 108 generates a virtual server 202 for constructing the system on the processing device 200 by using the VM deployment unit 112 and the NW deployment unit 113. The provisioning unit 108 deploys each module in the generated virtual server 202 by using the AP module deployment unit 109, the MW deployment unit 110, and the OS deployment unit 111.

The normality confirmation unit 106 confirms the normality of deployment of the PF module using the PF confirmation module and confirms the normality of deployment of the deployment target module using the own confirmation module.

The construction request input unit 107 accepts an input of the system construction request from a user or the like.

The processing device 200 is a computer with a basic OS with a communication function, a program for installing, and the like, for example. The processing device 200 includes a virtualization infrastructure 201 such as a VM monitor, a hypervisor. The virtualization infrastructure 201 generates the virtual server 202 in response to a request from the deployment unit 105 and deploys each module received from the deployment unit 105 in the generated virtual server 202. The virtual server 202 performs a process of each deployed module.

The deployment device 100 may be a program-controlled computer which includes a CPU (Central Processing Unit) and a storage medium storing a program. The module storage unit 102 and the configuration information storage unit 104 may be configured as a separate storage medium or configured as one storage medium.

Next, the operation of the deployment device 100 according to the first exemplary embodiment of the present invention will be described.

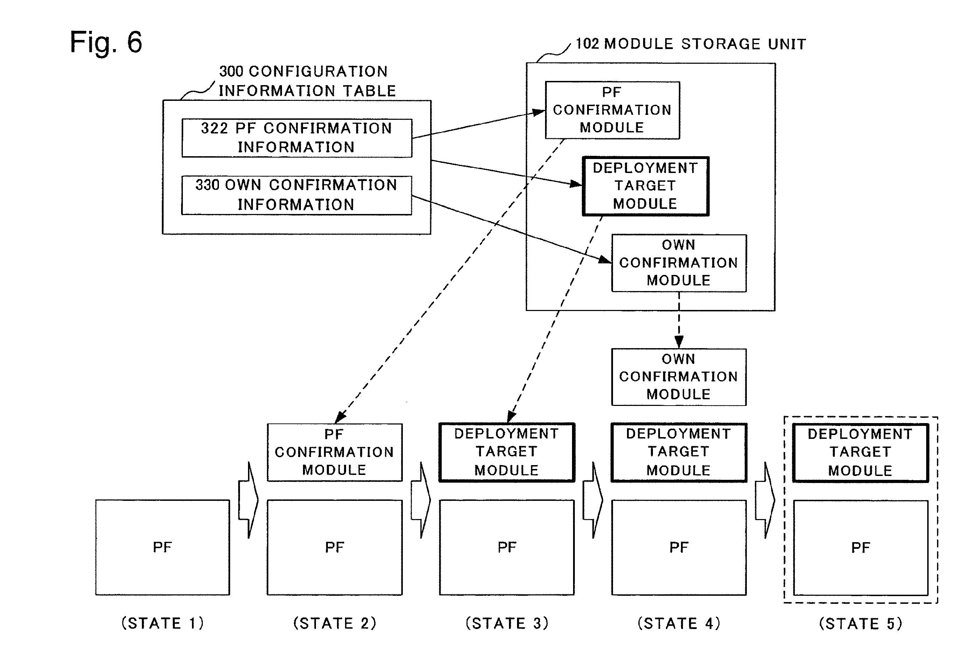

First, a summary of a normality confirmation method according to the first exemplary embodiment of the present invention will be described. Fig. 6 is a diagram showing the summary of the normality confirmation method according to the first exemplary embodiment of the present invention.

Here, it is assumed that the platform for the deployment target module has already been deployed (state 1 shown in Fig. 6). The normality confirmation unit 106 refers to the configuration information table 300 of the deployment target module, deploys the PF confirmation module acquired from the module storage unit 102 in the processing device 200, and confirms the normality of deployment of the PF module (state 2). When it is confirmed that the PF module is normally deployed, the provisioning unit 108 refers to the configuration information table 300 and deploys the deployment target module acquired from the module storage unit 102 in the processing device 200 (state 3). The normality confirmation unit 106 refers to the configuration information table 300, deploys the own confirmation module acquired from the module storage unit 102 in the processing device 200, and confirms the normality of deployment of the deployment target module (state 4). When it is confirmed that the deployment target module is normally deployed, a module group of the modules whose orders are equal to or lower than the order of the deployment target module is regarded as a new platform (state 5). Then, a high order module whose order is higher than the order of the deployment target module is deployed.

Thus, in the first exemplary embodiment of the present invention, in a process in which the modules of which the system is composed are deployed in increasing order of hierarchy of the module, the normality of deployment of the PF module is confirmed in the deployment target module point of view before deploying the deployment target module, the normality of deployment of the deployment target module is confirmed in the deployment target module point of view after deploying the deployment target module, and these confirmation processes are repeated.

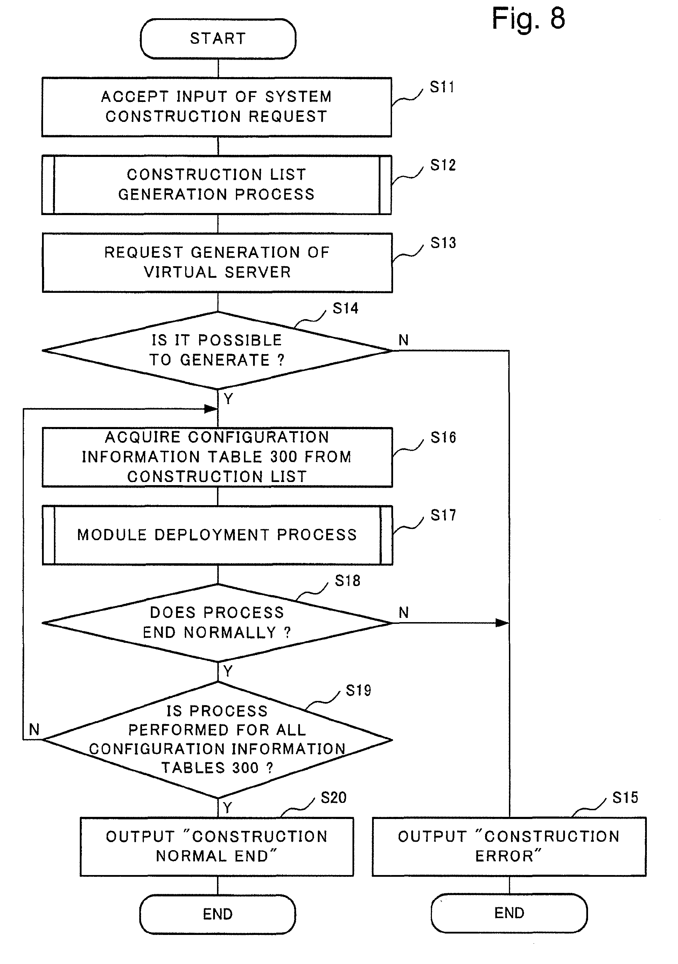

Next, a system construction process in the first exemplary embodiment of the present invention will be described. Fig. 8 is a flowchart showing the system construction process according to the first exemplary embodiment of the present invention.

First, the construction request input unit 107 accepts an input of the system construction request in which a construction target system is designated from the user or the like (step S11). Here, for example, the construction target system is designated by the identifier of the AP module that is the highest order module in the system.

For example, the construction request input unit 107 receives the identifier "AP1" of the AP module in the construction target system.

The provisioning unit 108 generates a construction list (step S12).

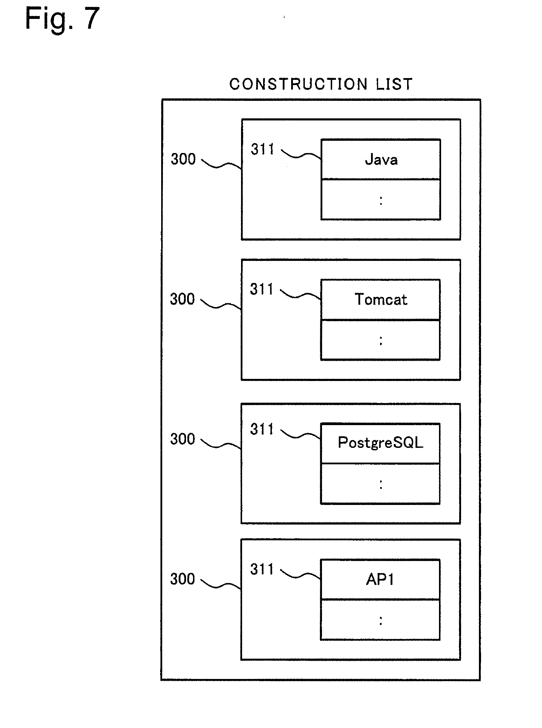

Fig. 7 is a diagram showing an example of the construction list according to the first exemplary embodiment of the present invention. The construction list is a list of the configuration information tables 300 of the modules to be deployed when the system is constructed. The configuration information tables 300 are arranged in the construction list in order of deployment.

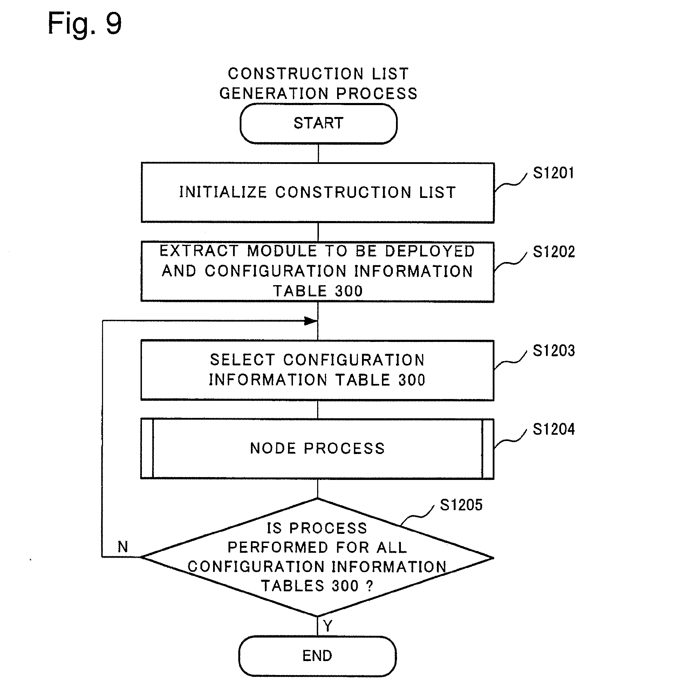

Fig. 9 is a flowchart showing a detail of a construction list generation process (step S12) according to the first exemplary embodiment of the present invention. Here, the configuration information tables 300 associated with each other by the dependency relationships are regarded as a directed graph and the construction list is generated based on a topological sort algorithm in graph theory.

First, the provisioning unit 108 initializes the construction list (step S1201). The provisioning unit 108 acquires the configuration information table 300 of the AP module designated in step S11 from the configuration information storage unit 104. The provisioning unit 108 identifies the modules to be deployed by recursively repeating the acquisition of the configuration information table 300 of the PF module designated by the PF module identifier 321, and extracts the configuration information table 300 of each module (step S1202). Here, it is assumed that a cross-reference or a circulation is not included in the dependency relationships between the modules.

For example, the provisioning unit 108 identifies the module "AP1", the module "Tomcat", the module "PostgreSQL", and the module "Java" as the module to be deployed by recursively acquiring the PF module identifier 321 from the configuration information table 300 (Fig. 4) of the module "AP1", and acquires the configuration information table 300 of each module.

The provisioning unit 108 selects one of the acquired configuration information tables 300 (step S1203), and performs a node process mentioned later, designating the selected configuration information table 300 (step S1204). The provisioning unit 108 repeats the processes of steps S1203 and S1204 for all the configuration information tables 300 extracted in step S1202 (step S1205).

For example, the provisioning unit 108 performs the node processes designating the configuration information tables 300 of the module "AP1", the module "Tomcat", the module "PostgreSQL", and the module "Java", respectively.

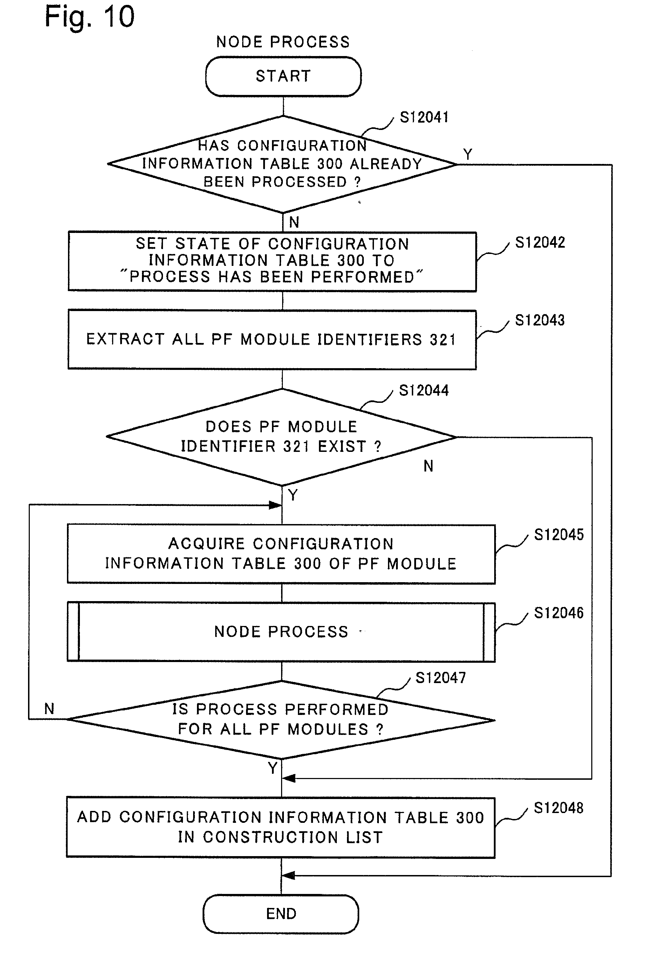

Fig. 10 is a flowchart showing a detail of the node process (step S1204) according to the first exemplary embodiment of the present invention.

First, the provisioning unit 108 determines whether the process has already been performed with respect to the designated configuration information table 300 (step S12041). When the process has already been performed with respect to the designated configuration information table 300 (step S12041/Y), the provisioning unit 108 ends the process. When the process has not already been performed with respect to the designated configuration information table 300 (step S512041/N), the provisioning unit 108 sets the state of the designated configuration information table 300 to "process has already been performed" (step S12042). The provisioning unit 108 extracts all the PF module identifiers 321 included in the designated configuration information table 300 (step S12043).

When the PF module identifier 321 does not exist (step S12044/N), the process of the provisioning unit 108 proceeds to step S12048.

When the PF module identifier 321 exists (step S12044/Y), the provisioning unit 108 selects one of the extracted PF modules and acquires the configuration information table 300 of the PF module (step S12045). The provisioning unit 108 recursively performs the node process (steps S12041 to S12048) designating the acquired configuration information table 300 (step S12046). The provisioning unit 108 repeats the processes of steps S12045 and S12046 with respect to all the extracted PF modules in step S12043 (step S12047). The provisioning unit 108 adds the designated configuration information table 300 in the construction list (step S12048).

For example, in step S1204, the node process is performed designating the configuration information table 300 (Fig. 4) of the module "AP1". The provisioning unit 108 sets the state of the configuration information table 300 of the module "AP1" to "process has already been performed". The provisioning unit 108 extracts the PF module identifiers 321 "Tomcat" and "PostgreSQL" from the configuration information table 300 of the module "AP1".

The provisioning unit 108 performs the node process designating the configuration information table 300 (Fig. 5) of the module "Tomcat".

The provisioning unit 108 sets the state of the configuration information table 300 of the module "Tomcat" to "process has already been performed". The provisioning unit 108 extracts the PF module identifier 321 "Java" from the configuration information table 300 of the module "Tomcat". The provisioning unit 108 performs the node process designating the module "Java".

The provisioning unit 108 sets the state of the configuration information table 300 of the module "Java" to "process has already been performed". Here, it is assumed that the PF module information 320 is not set in the configuration information table 300 of the module "Java". Because the PF module identifier 321 does not exist in the configuration information table 300 of the module "Java", the provisioning unit 108 adds the configuration information table 300 of the module "Java" to the top of the construction list.

Next, the provisioning unit 108 adds the configuration information table 300 of the module "Tomcat" to the construction list.

Further, the provisioning unit 108 performs the node process designating the module "PostgreSQL". The provisioning unit 108 sets the state of the configuration information table 300 of the module "PostgreSQL" to "process has already been performed". Here, it is assumed that the PF module information 320 is not set in the configuration information table 300 of the module "PostgreSQL". Because the PF module identifier 321 does not exist in the configuration information table 300 of the module "PostgreSQL", the provisioning unit 108 adds the configuration information table 300 of the module "PostgreSQL" to the construction list.

The provisioning unit 108 adds the configuration information table 300 of the module "AP1" to the construction list.

In step S1204, the node processes are performed designating the configuration information tables 300 of the module "Tomcat", the module "PostgreSQL", and the module "Java", respectively. However, because the states of the configuration information table 300 of these modules are set to "process has already been performed", the construction list is not changed.

For example, when the above-mentioned construction list generation process (step S12) is performed, the construction list in which the configuration information tables 300 of the module "Java", the module "Tomcat", the module "PostgreSQL", and the module "AP1" are arranged in this order is generated, as shown in Fig. 7.

Note that, as long as an order of deployment of each module is determined so that the PF module on which each module depends is first deployed, the construction list may be generated by another method using another algorithm other than the topological sort algorithm.

When the construction list generation process ends, the provisioning unit 108 requests the virtualization infrastructure 201 to generate the virtual server 202 for constructing the system via the VM deployment unit 112 and the NW deployment unit 113 (step S13).

When the virtual server 202 cannot be generated (step S14/N), the provisioning unit 108 outputs a "construction error" message (step S 15) and ends the process.

When the virtual server 202 can be generated (step S14/Y), the provisioning unit 108 acquires the configuration information table 300 listed at the top of the generated construction list (step S16) and performs a module deployment process described later by designating the acquired configuration information table 300 (step S 17). When the module deployment process ends, the provisioning unit 108 determines whether or not the module deployment process has ended normally (step S18).

When it is determined that the module deployment process has not ended normally (step S18/N), the provisioning unit 108 outputs the "construction error" message (step S 15) and ends the process.

The provisioning unit 108 repeats the processes of steps S16 to S18 for all the configuration information tables 300 included in the construction list (step S 19). When the module deployment process has ended normally for all the configuration information tables 300 included in the construction list, the provisioning unit 108 outputs a "construction normal end" message (step S20) and ends the process.

For example, the provisioning unit 108 performs the module deployment processes designating the configuration information tables 300 of the module "Java", the module "Tomcat", the module "PostgreSQL", and the module "AP1" included in the construction list shown in Fig. 7, respectively, in this order.

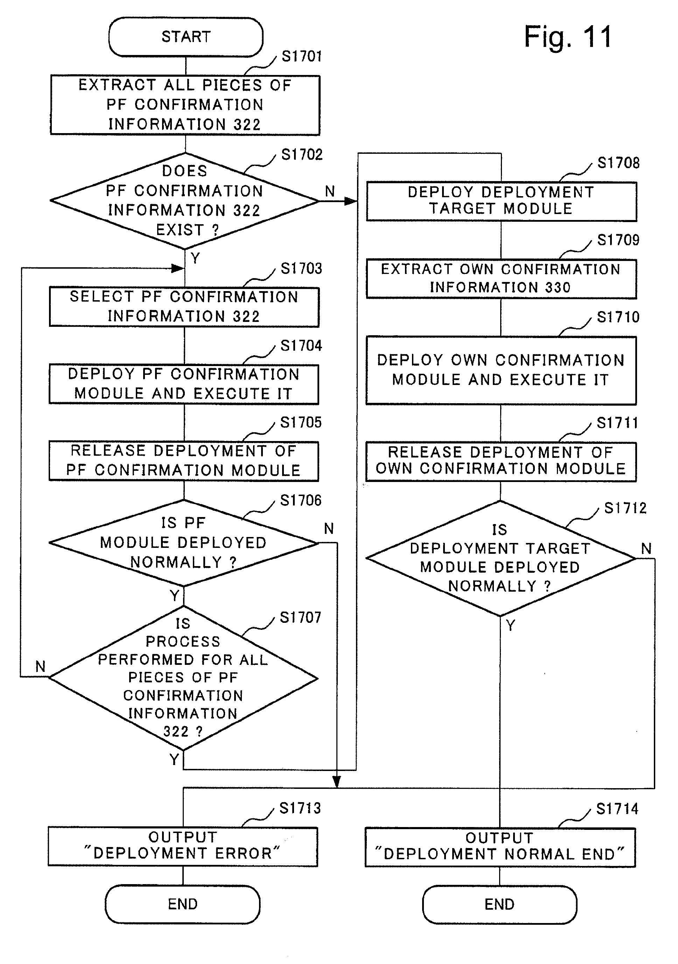

Fig. 11 is a flowchart showing a detail of the module deployment process (step S 17) according to the first exemplary embodiment of the present invention.

First, the normality confirmation unit 106 extracts all pieces of the PF confirmation information 322 from the designated configuration information table 300 (step S1701).

When the PF confirmation information 322 does not exist (step S1702/N), the process of the normality confirmation unit 106 proceeds to the process of step S1708.

When the PF confirmation information 322 exists (step S1702/Y), the normality confirmation unit 106 selects one of the extracted pieces of PF confirmation information 322 (step S1703). The normality confirmation unit 106 acquires the file of the PF confirmation module that is designated by the file identifier 324 in the selected PF confirmation information 322, from the module storage unit 102. The normality confirmation unit 106 deploys the PF confirmation module in the processing device 200 via one of the deployment units 109 to 111 and instructs it to execute the PF confirmation module (step S1704). When the process of the PF confirmation module has ended, the normality confirmation unit 106 releases deployment of (uninstalls) the PF confirmation module (step S1705).

When the normality of deployment of the PF module cannot be confirmed as a result of executing the PF confirmation module (step S1706/N), the normality confirmation unit 106 outputs an error message (step S1713) and ends the process.

The normality confirmation unit 106 repeats the processes of steps S1703 to S1706 for all pieces of the PF confirmation information 322 extracted in step S1701 (step S1707).

The provisioning unit 108 extracts the module information 310 from the configuration information table 300. The provisioning unit 108 acquires the file of the deployment target module designated by the file identifier 312 in the module information 310 from the module storage unit 102. The provisioning unit 108 deploys the deployment target module in the processing device 200 via one of the deployment units 109 to 111 (step S1708).

The normality confirmation unit 106 extracts the own confirmation information 330 from the configuration information table 300 (step S1709). The normality confirmation unit 106 acquires the file of the own confirmation module designated by the file identifier 332 in the extracted own confirmation information 330, from the module storage unit 102. The normality confirmation unit 106 deploys the own confirmation module in the processing device 200 via one of the deployment units 109 to 111 and instructs it to execute the own confirmation module (step S1710). When the process of the own confirmation module has ended, the normality confirmation unit 106 releases deployment of (uninstalls) the own confirmation module (step S1711).

When the normality of deployment of the deployment target module cannot be confirmed as a result of executing the own confirmation module (step S1712/N), the normality confirmation unit 106 outputs a "deployment error" message (step S1713) and ends the process.

When the normality of deployment of the deployment target module can be confirmed (step S1712/Y), the normality confirmation unit 106 outputs a "deployment normal end" message (step S1714) and ends the process.

For example, it is assumed that in step S 17, the module deployment process is performed designating the configuration information table 300 (Fig. 5) of the module "Tomcat" after the module deployment process for the module "Java" has been performed. In this case, the normality confirmation unit 106 acquires a file "Pf4Tomcat" of the PF confirmation module designated by the file identifier 324 in the PF confirmation information 322 and deploys it in the processing device 200. The normality confirmation unit 106 confirms the normality of deployment of the PF module "Java" by executing the PF confirmation module. When the PF module "Java" is normally deployed, the normality confirmation unit 106 acquires a file "apache-tomcat-6.0.35.tgz" of the deployment target module designated by the file identifier 312 in the module information 310 and deploys the deployment target module "Tomcat" in the processing device 200 by using the file "apache-tomcat-6.0.35.tgz". Further, the normality confirmation unit 106 acquires a file "Tomcatself" of the own confirmation module designated by the file identifier 332 in the own confirmation information 330 and deploys it in the processing device 200. The normality confirmation unit 106 executes the own confirmation module and thereby confirms the normality of deployment of the deployment target module "Tomcat". When the deployment target module "Tomcat" is normally deployed, the normality confirmation unit 106 outputs the "deployment normal end" message.

Further, it is assumed that the module deployment process is performed designating the configuration information table 300 (Fig. 4) of the module "AP1" after the module deployment process of the module "PostgreSQL" has been performed. In this case, the normality confirmation unit 106 acquires a file "Pf4AP1.war" of the PF confirmation module designated by the file identifier 324 in the PF confirmation information 322 and deploys it in the processing device 200. The normality confirmation unit 106 confirms the normality of deployment of the PF module "Tomcat" by executing the PF confirmation module. Further, the normality confirmation unit 106 acquires a file "PSQL4AP1.sq1" of the PF confirmation module designated by the file identifier 324 in the PF confirmation information 322 and deploys it in the processing device 200. The normality confirmation unit 106 confirms the normality of deployment of the PF module "PostgreSQL" by executing the PF confirmation module. When the PF module "Tomcat" and the PF module "PostgreSQL" are normally deployed, the normality confirmation unit 106 acquires a file "ap1Module.war" of the deployment target module designated by the file identifier 312 in the module information 310 and deploys the deployment target module "AP1" in the processing device 200 by using the file "ap1Module.war". Further, the normality confirmation unit 106 acquires a file "AP1self" of the own confirmation module designated by the file identifier 332 in the own confirmation information 330 and deploys it in the processing device 200. The normality confirmation unit 106 executes the own confirmation module and thereby confirms the normality of deployment of the deployment target module "AP1". When the deployment target module "AP1" is normally deployed, the normality confirmation unit 106 outputs the "deployment normal end" message.

When the deployment process normally ends for all the modules: the module "Java", the module "Tomcat", the module "PostgreSQL", and the module "AP1", the provisioning unit 108 outputs the "construction normal end" message.

As described above, the operation of the first exemplary embodiment of the present invention is completed.

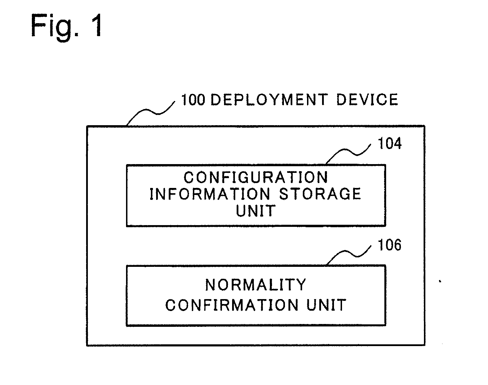

Next, a characteristic configuration of the first exemplary embodiment of the present invention will be described. Fig. 1 is a block diagram showing a characteristic configuration according to the first exemplary embodiment of the present invention.

Referring to Fig. 1, a deployment device 100 includes a configuration information storage unit 104 and a normality confirmation unit 106.

The configuration information storage unit 104 stores a configuration information table 300 including at least one of platform (PF) confirmation information 322 and own confirmation information 330 in association with an identifier of a module of which a system is composed. The PF configuration information 322 includes an identifier of a PF confirmation module for confirming normality of deployment of a PF module which is another module on which the module depends. The own confirmation information 330 includes an identifier of an own confirmation module for confirming normality of deployment of the module.

The normality confirmation unit 106 performs at least one of confirmation of the normality of the deployment of the PF module in a processing device 200, using the PF confirmation module, prior to the deployment of the module in the processing device 200, and confirmation of the normality of the deployment of the module in the processing device 200, using the own confirmation module, after the deployment of the module in the processing device 200, by referring to the configuration information table 300.

According to the first exemplary embodiment of the present invention, when construction a system, the normality of the system can be confirmed more efficiently. This is because the configuration information table 300 of the module of which the system is composed includes the identifiers of the PF confirmation module and the own confirmation module, and the normality confirmation unit 106 performs confirmation of the normality of deployment of the PF module using the PF confirmation module and confirmation of the normality of deployment of the deployment target module using the own confirmation module when each module of which the system is composed is deployed. Whereby, it is not necessary to define a procedure for confirming the normality for each system to be constructed and the burden on the developer is reduced.

Further, according to the first exemplary embodiment of the present invention, when failing to construct the system, it is possible to easily find a step in which the failure occurs among the steps for deploying the module of which the system is composed. This is because, as mentioned above, the normality confirmation unit 106 confirms the normality of deployment of the PF module and the normality of deployment of the deployment target module when the module of which the system is composed is deployed. As a result, the module whose deployment cannot be successfully performed can be easily identified. Further, as a result, the developer can easily identify the cause of failure of the deployment: the failure of deployment of the PF module or the failure of deployment of the deployment target module.

### (Second exemplary embodiment)

Next, a second exemplary embodiment of the present invention will be described.

In the first exemplary embodiment of the present invention, when the module of which the system is composed is deployed, the normality of deployment of the PF module and the normality of deployment of the deployment target module are confirmed. By this process, the reliability of the constructed system is improved. However, it takes a long time to construct the system.

In the second exemplary embodiment of the present invention, it is determined whether to confirm the normality of deployment of the PF module and the normality of deployment of the deployment of the target module according to a degree of importance and a reliability threshold value. This is a difference between the first exemplary embodiment of the present invention and the second exemplary embodiment of the present invention.

The configuration of the second exemplary embodiment of the present invention is similar to the configuration (Fig. 2) of the first exemplary embodiment of the present invention.

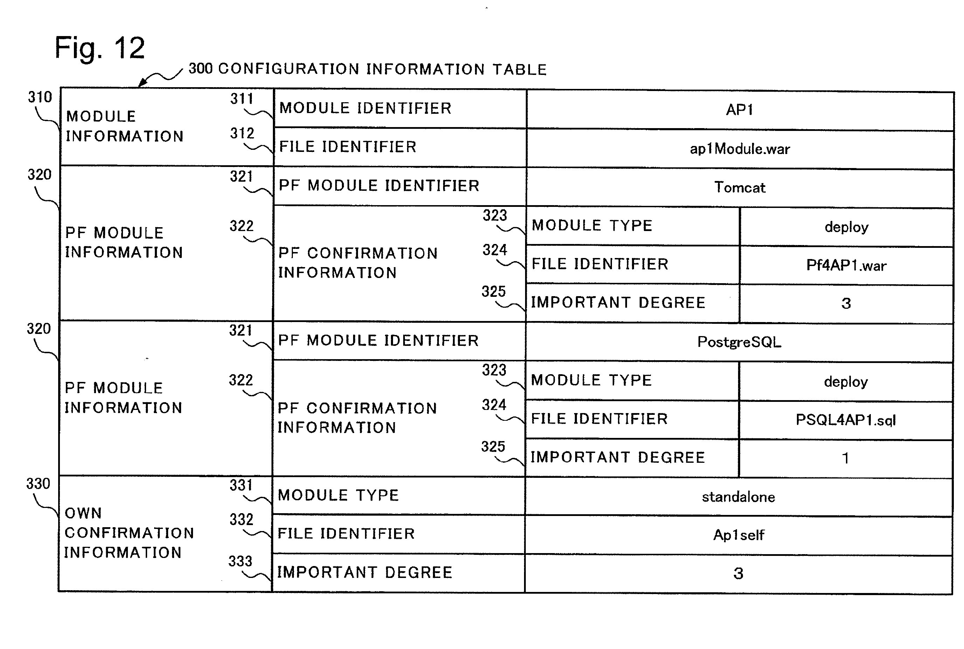

Fig. 12 is a diagram showing an example of the configuration information table 300 according to the second exemplary embodiment of the present invention. The PF confirmation information 322 includes an important degree 325 in addition to the module type 323 and the file identifier 324 of the PF confirmation module. The important degree 325 indicates a degree of importance with respect to the confirmation of the normality of deployment of the PF module. Further, the own confirmation information 330 includes an important degree 333 in addition to the type 331 and the file identifier 332 of the own confirmation module. The important degree 333 indicates a degree of importance with respect to the confirmation of the normality of deployment of the deployment target module. Note that it is assumed that, a larger value of the important degree 325 or important degree 333 means higher importance.

The normality confirmation unit 106 determines whether to confirm the normality of deployment of the PF module according to the important degree 325 and the reliability threshold value. The normality confirmation unit 106 also determines whether to confirm the normality of deployment of the deployment target module according to the important degree 333 and the reliability threshold value.

Next, the operation of the deployment device 100 according to the second exemplary embodiment of the present invention will be described.

In the second exemplary embodiment of the present invention, the reliability threshold value is designated in the system construction request from the user or the like in addition to the identifier of the AP module.

In the module deployment process shown in Fig. 11, after the PF confirmation information 322 is selected in step S1703, the normality confirmation unit 106 compares the important degree 325 in the selected PF confirmation information 322 with the reliability threshold value. When the important degree 325 is equal to or greater than the reliability threshold value, the normality confirmation unit 106 confirms the normality of deployment of the PF module using the PF confirmation module (steps S1704 to S1706) and when the important degree 325 is smaller than the reliability threshold value, the normality confirmation unit 106 does not confirm the normality of deployment of the PF module.

Further, after extracting the own confirmation information 330 in step S1709, the normality confirmation unit 106 compares the important degree 333 in the extracted own confirmation information 330 with the reliability threshold value. When the important degree 333 is equal to or greater than the reliability threshold value, the normality confirmation unit 106 confirms the normality of deployment of the deployment target module using the own confirmation module (steps S1710 to S 1712). When the important degree 333 is smaller than the reliability threshold value, the normality confirmation unit 106 does not confirm the normality of deployment of the deployment target module.

As described above, the operation of the second exemplary embodiment of the present invention is completed.

According to the second exemplary embodiment of the present invention, the time required for system construction can be reduced compared with the first exemplary embodiment of the present invention. This is because the normality confirmation unit 106 compares the important degree of the confirmation of the normality with the reliability threshold value and determines whether to confirm the normality of deployment of the PF module and the normality of deployment of the deployment target module. By this process, with respect to a module which has a small possibility that deployment failure occurs and a module whose importance is low, a value of the important degree is reduced and whereby the confirmation of the normality of deployment can be omitted and the time required for system construction can be reduced. In a case the system needs to be constructed rapidly such as a disaster recovery or the like, by increasing the reliability threshold value, the normality of deployment can be confirmed for a minimum number of modules and the system can be constructed rapidly.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2012-127259, filed on June 4, 2012, the disclosure of which is incorporated herein in its entirety by reference.

### [Reference signs List]

- 1: development environment
- 2: external repository
- 100: deployment device
- 101: module management unit
- 102: module storage unit
- 103: configuration information management unit
- 104: configuration information storage unit
- 105: deployment unit
- 106: normality confirmation unit
- 107: construction request input unit
- 108: provisioning unit
- 109: AP module deployment unit
- 110: MW deployment unit
- 111: OS deployment unit
- 112: VM deployment unit
- 113: NW deployment unit
- 200: processing device
- 201: virtualization infrastructure
- 202: virtual server
- 300: configuration information table
- 310: module information
- 311: module identifier
- 312: file identifier
- 320: PF module information
- 321: PF module identifier
- 322: PF confirmation information
- 323: module type
- 324: file identifier
- 325: important degree
- 330: own confirmation information
- 331: module type
- 332: file identifier
- 333: important degree

## Claims

1. A deployment device comprising:
a configuration information storage means for storing configuration information including at least one of platform (PF) confirmation information and own confirmation information in association with an identifier of a module of which a system is composed, the PF configuration information including an identifier of a PF confirmation module for confirming normality of deployment of a PF module which is another module on which the module depends, the own confirmation information including an identifier of an own confirmation module for confirming normality of deployment of the module; and
a normality confirmation means for performing at least one of confirmation of the normality of the deployment of the PF module in a processing device, using the PF confirmation module, prior to the deployment of the module in the processing device, and confirmation of the normality of the deployment of the module in the processing device, using the own confirmation module, after the deployment of the module in the processing device, by referring to the configuration information.

2. The deployment device according to claim 1 further comprising deployment means for deploying the module in the processing device.

3. The deployment device according to claim 2, wherein
the configuration information storage means stores the configuration information in association with the identifier of each of a plurality of the modules of which the system is composed,
the configuration information further includes the identifier of the PF module,
the deployment means determines, by referring to the configuration information of each of the plurality of the modules, an order of deployment of the plurality of the modules so that the PF module of each of the plurality of the modules is deployed in the processing device before deploying the module, and deploy each of the plurality of the modules according to the determined order, and
the normality confirmation means performs, when deploying each of the plurality of the modules, at least one of the confirmation of the normality of deployment of the PF module with the PF confirmation module and confirmation of the normality of deployment of the module with the own confirmation module.

4. The deployment device according to claim 2 or 3, wherein,
when it is determined that the PF module is normally deployed as a result of the confirmation of the normality of deployment of the PF module with the PF confirmation module, the deployment means deploys the module in the processing device.

5. The deployment device according to any one of claims 2 to 4, wherein,
when it is determined that the module is normally deployed as a result of the confirmation of the normality of deployment of the module with the own confirmation module, the deployment means deploys a module which uses the deployed module as the PF module.

6. The deployment device according to any one of claims 1 to 5, wherein
the PF confirmation information further includes an important degree with respect to the confirmation of the normality of deployment of the PF module, and
the normality confirmation means, by comparing the important degree with respect to the confirmation of the normality of deployment of the PF module with an inputted threshold value, determines whether or not to perform the confirmation of the normality of deployment of the PF module.

7. The deployment device according to any one of claims 1 to 6, wherein
the own confirmation information further includes an important degree with respect to the confirmation of the normality of deployment of the module, and
the normality confirmation means, by comparing the important degree with respect to the confirmation of the normality of deployment of the module with an inputted threshold value, determines whether or not to perform the confirmation of the normality of deployment of the module.

8. The deployment device according to any one of claims 1 to 7, wherein
the PF confirmation module performs the confirmation of the normality of deployment of the PF module based on at least one of a presence or absence of a predetermined file generated when the PF module is deployed, a presence or absence of a predetermined process activated when the PF module is deployed, a presence or absence of a predetermined character string of a log generated when the PF module is deployed, and a result obtained by executing a predetermined function of the PF module.

9. The deployment device according to any one of claims 1 to 8, wherein the own confirmation module performs the confirmation of the normality of deployment of the module based on at least one of a presence or absence of a predetermined file generated when the module is deployed, a presence or absence of a predetermined process activated when the module is deployed, a presence or absence of a predetermined character string of a log generated when the module is deployed, and a result obtained by executing a predetermined function of the module.

10. A deployment method comprising:
storing configuration information including at least one of platform (PF) confirmation information and own confirmation information in association with an identifier of a module of which a system is composed, the PF configuration information including an identifier of a PF confirmation module for confirming normality of deployment of a PF module which is another module on which the module depends, the own confirmation information including an identifier of an own confirmation module for confirming normality of deployment of the module;
deploying the module in a processing device; and
performing at least one of confirmation of the normality of the deployment of the PF module in the processing device, using the PF confirmation module, prior to the deployment of the module in the processing device, and confirmation of the normality of the deployment of the module in the processing device, using the own confirmation module, after the deployment of the module in the processing device, by referring to the configuration information.

11. A computer readable storage medium recording thereon a program, causing a computer to perform a method comprising:
storing configuration information including at least one of platform (PF) confirmation information and own confirmation information in association with an identifier of a module of which a system is composed, the PF configuration information including an identifier of a PF confirmation module for confirming normality of deployment of a PF module which is another module on which the module depends, the own confirmation information including an identifier of an own confirmation module for confirming normality of deployment of the module;
deploying the module in a processing device; and
performing at least one of confirmation of the normality of the deployment of the PF module in the processing device, using the PF confirmation module, prior to the deployment of the module in the processing device, and confirmation of the normality of the deployment of the module in the processing device, using the own confirmation module, after the deployment of the module in the processing device, by referring to the configuration information.
